# EUROPÄISCHE PATENTANMELDUNG

(11) **EP 1 582 552 A1**
(43) Veröffentlichungstag der Anmeldung: **05.10.2005**
(21) Anmeldenummer: 05005819.7
(22) Anmeldetag: 17.03.2005
(51) Int. Cl.: C08J 3/22, G03C 1/79, G03C 1/795, D21H 19/56, C09D 123/02

(54) **Masterbatch**

(30) Priorität: 02.04.2004 DE 202004005474 U
(71) Anmelder: Felix Schoeller jr Foto- und Spezialpapiere GmbH & Co. KG, 49086 Osnabrück (DE)
(72) Erfinder: Niekamp, Dirk, 49152 Bad Essen (DE); Niesmann, Jörg, Dr., 49074 Osnabrück (DE); Overberg, Andreas, Dr., 49078 Osnabrück (DE)
(74) Vertreter: Cohausz & Florack

(57) **Zusammenfassung**

Ein Masterbatch (Kunststoff/Pigmentkonzentrat) zur Herstellung von Schichtträgern für Bebilderungsverfahren, enthaltend
- 25 bis 80 Gew.% Titandioxid,
- 20 bis 75 Gew.% Polyolefinharz,
- 0,1 bis 10 Gew.% Alkalialuminiumsulfosilikat-Rotpigment,
- 0,1 bis 6 Gew.% Stabilisator,
jeweils bezogen auf die Masse des Masterbatches, liefert Beschichtungen mit einem ausgezeichneten Verhalten gegenüber der Bildung unerwünschter sogenannter Düsenstreifen.

## Beschreibung

Die Erfindung betrifft ein Kunststoffkonzentrat (Masterbatch) zur Herstellung einer Beschichtungsmasse für Schichtträger für Bebilderungsverfahren sowie unter Verwendung des Masterbatches hergestellte Schichtträger wie Fotobasispaiere, Träger für Ink-Jet-Druck und D2T2-Druck.

Wasserfeste fotografische Schichtträger enthalten ein geleimtes Rohpapier mit wasserfesten Polyolefinharzschichten auf beiden Seiten des Rohpapiers. Die Polyolefinschicht wird auf das Rohpapier durch Extrusion aufgebracht.

Die Harzschicht auf der Vorderseite eines fotografischen Schichtträgers enthält üblicherweise lichtreflektierende Weißpigmente, Farbstoffe, Buntpigmente, optische Aufheller, Stabilisatoren, Dispergierhilfsmittel, Trennmittel, Gleitmittel, Antioxidantien und Antistatika. Titandioxid ist das wichtigste Weißpigment in der Vorderseitenschicht eines fotografischen Schichtträgers.

Voraussetzung für die volle Entfaltung der Pigmenteigenschaften im Harz sowie für eine störungsfreie Verarbeitung ist die vollständige Zerteilung der Pigmentagglomerate und die homogene Verteilung der Pigmentteilchen, insbesondere der Titandioxidteilchen. Dies ist besonders wichtig bei der Herstellung dünner Schichten oder Folien, da Pigmentagglomerate zur Lochbildung und damit zu Folienabrissen führen. Eine gute Dispergierung des Titandioxids im Polyolefinharz ist deshalb notwendig.

Aus diesen Gründen ist es seit langer Zeit bekannt zur Pigmentierung von Polyolefinen nicht die reinen Pigmente, sondern Pigment-Kunststoffkonzentrate, die sogenannten Masterbatches, in denen das Pigment bereits dispergiert vorliegt, einzusetzen. Die Herstellung solcher Konzentrate erfolgt in einem speziellen Arbeitsgang über die plastische Phase. Hierfür geeignet sind Kneter, Walzwerke und Extruder, wobei die Erhöhung der Scherkräfte eine Verbesserung des Dispergierzustands bewirkt. Die Herstellung solcher Masterbatche ist beispielsweise in der US 5 049 595 beschrieben.

Häufiger Bestandteil von Masterbatchen ist das sogenannte PV Echtrosa. Dabei handelt es sich um ein organisches Pigment, welches in der Polyolefinbeschichtungsmasse in einer Konzentration von 0,02 bis 0,01 und mehr Gew.%, bezogen auf die Masse der Beschichtung, vorkommt. Der Einsatz dieses organischen Pigments ist in der EP 0 571 721 A1 beschrieben. Dieses organische Pigment hat sich bewährt und wird seit vielen Jahren in großem Umfang in Masterbatchen zur Herstellung von fotografischen Schichtträgern als Rotpigment eingesetzt.

Beim Aufbringen von Polyolefinschichten auf Rohpapiere durch Extrusion können eine Reihe von unerwünschten Wirkungen auftreten, die zu einer mangelnden Qualität des fotografischen Schichtträgers (Fotobasispapier) führen. Zu diesen unerwünschten Effekten gehören beispielsweise die sogenannten Düsenstreifen. Diese entstehen durch Abbauprodukte des auf das Rohpapier zu extrudierenden Materials, die sich an den Düsenrändern der Extruderdüse ablagern. Treten infolge dieser Ablagerungen auf dem beschichteten Papier sogenannte Düsenstreifen auf, muß der Extrusionsvorgang unterbrochen und die Düse gereinigt werden. Es ist deshalb wünschenswert, Düsenstreifen zu vermeiden, um die Extrusion seltener unterbrechen zu müssen.

Überraschend wurde festgestellt, dass beim Ersatz des organischen Rotpigments PV Echtrosa durch ein anorganisches Rotpigment auf der Basis eines Natriumaluminiumsulfosilikats im Masterbatch bei der Extrusion nahezu keine Düsenstreifen mehr auftreten.

Gegenstand der Erfindung ist mithin ein Masterbatch zur Herstellung von fotografischen Schichtträgern, der ein Alkalialuminiumsulfosilikat-Rotpigment enthält.

Der erfindungsgemäße Masterbatch enthält
- 25 bis 80 Gew.% Titandioxid,
- 20 bis 75 Gew.% Polyolefinharz
- 0,1 bis 10 Gew.% Akalialuminiumsulfosilikat-Rotpigment,
- 0,1 bis 6 Gew.% Stabilisator
jeweils bezogen auf die Masse des Masterbatches und gegebenenfalls weitere üblicherweise in Masterbatchen eingesetzte Additive wie optische Aufheller, Antioxidantien und Farbpigmente.

Gemäß einer besonders bevorzugten Ausführungsform ist das Rotpigment Ultramarinviolett. Ein besonders bevorzugtes Rotpigment ist ein Alkalialuminiumsulfosilikat mit der Bezeichnung CAS 12769-96-9. Seine chemische Zusammensetzung ist oder ist nahe bei 2Na₂Al₂Si₂O₆ x Na₂S. Das Rotpigment kann in einer Menge von 0,1 bis 10 Gew.%, vorzugsweise 1,0 bis 2,0 Gew.% und in einer besonders bevorzugten Ausführungsform in einer Menge von 1,3 bis 1,6 Gew.%, bezogen auf die Masse des Masterbatches, eingesetzt werden.

Es hat sich als vorteilhaft erwiesen, neben dem zuvor genannten Rotpigment ein Blaupigment einzusetzen. Besonders bevorzugt ist ein anorganisches Ultramarinblau (CAS 57455-37-5). Seine chemische Zusammensetzung ist oder ist nahe bei Na₂OSAl₂O₃SiO₂. Das Blaupigment kann in einer Menge von 0,05 bis 5 Gew.%, vorzugsweise 0,2 bis 0,6 Gew.%, bezogen auf die Masse des Masterbatches, in diesem enthalten sein.

Überraschend wurde festgestellt, dass die Wirkung des erfindungsgemäß eingesetzten Rotpigments auf die Unterdrückung der Düsenstreifen durch den Einsatz zweier an sich bekannter Stabilisatoren noch verstärkt wird. Erzielt wird diese Wirkung insbesondere, wenn das Massenverhältnis anorganisches Rotpigment zur Gesamtmasse der Stabilisatoren 200 : 1 bis 1 : 60, besonders bevorzugt 40 : 1 bis 1 : 1, beträgt.

Bei diesen Stabilisatoren kann es sich um ein Phosphit-Antioxidans und ein phenolisches Antioxidans handeln. Besonders bevorzugt ist das im Handel erhältliche Phosphit-Antioxidans mit der chemischen Bezeichnung 2,4,6-Tri-tert.-butylphenyl-2-butyl-2-ethyl-1,3-propandiolphosphit. Das Phosphit-Antioxidans kann erfindungsgemäß in einer Menge von 0,05 bis 3 Gew.%, besonders bevorzugt in einer Menge von 0,1 bis 0,4 Gew.%, bezogen auf die Masse des Masterbatches, eingesetzt werden.

Das phenolisches Antioxidans ist vorzugsweise ein (3,5-Di-tert.-butylhydroxyphenyl)propionsäureester des Pentaerythrits oder des Octadecanols. Besonders bevorzugt ist das phenolische Antioxidans mit der chemischen Bezeichnung Oktadecyl-3,5-di-tert.-butyl-4-hydroxyhydrocinnamat. Das phenolische Antioxidans kann erfindungsgemäß in einer Menge von 0,05 bis 3 Gew.%, besonders bevorzugt in einer Menge von 0,1 bis 0,6 Gew.%, bezogen auf die Masse des Masterbatches, eingesetzt werden Überraschend konnte auch festgestellt werden, dass der alleinige Einsatz des Phosphit-Antioxidans zur Verbesserung der Fließeigenschaften des Polyolefinharzes und dadurch zur Verringerung der sogenannten Pits auf der Polyolefinharz-Oberfläche führt. Pits sind kraterförmige Vertiefungen, die sich negativ auf die für die Bildqualität entscheidenden Oberflächeneigenschaften des Trägers wie Glanz und Glätte auswirken. Der Einsatz des phenolischen Antioxidans trägt zudem zur Verbesserung der sogenannte Release-Eigenschaften bei, das bedeutet, ein Kleben des Polymerfilms am Kühlzylinder nach der Extrusion wird unterdrückt.

Unter Einsatz des erfindungemäßen Masterbatches nach Verdünnung mit einem Harz können bei der Beschichtung durch Extrusion Extrusiongeschwindigkeiten von bis zu 600 m/min gefahren werden, ohne dass Beeinträchtigungen betreffend das Pitsniveau oder Probleme betreffend die Haftung des Materials an der Rolle auftreten.

Gemäß bevorzugten Ausführungsformen des erfindungsgemäßen Masterbatches kann die Gesamtmenge des Stabilisators vorzugsweise 0,1 bis 4 Gew.%, 0,1 bis 3 Gew.% und 0,1 bis 1 Gew.% betragen. Ein geeignetes Mengenverhältnis von Phosphit-Antioxidans zu Phenol-Antioxidans kann 5:1 bis 1:5, vorzugsweise 1:3 bis 3:1, insbesondere 1:2 bis 2:1, betragen.

Titandioxid kann als Rutil oder Anatas eingesetzt werden. Rutil ist bevorzugt. Das Titandioxid kann anorganisch und/oder organisch behandelt sein. Besonders bevorzugt ist ein organisch behandeltes Titandioxid, charakterisiert durch einen Anteil von Kohlenstoff von etwa 0,18 bis 0,24 Gew.%. Die mittlere Teilchengröße beträgt vorzugsweise 0,20 bis 0,35 µm. Die Ölzahl kann vorzugsweise kleiner 14, besonders bevorzugt 10 bis 12, beispielsweise etwa 11 betragen.

Erfindungsgemäß geeignete Aufheller umfassen die Aminostilbensulfonsäure-, Diarylpyrazolyl- und Bis(benzoxazolyl)stilbenderivate. Der Aufheller oder ein Aufhellergemisch kann in einer Menge von 0,05 bis 1 Gew.%, vorzugsweise 0,1 bis 0,4 Gew.%, bezogen auf die Masse des Masterbatches enthalten sein.

Zur Herstellung der Polyolefinbeschichtung von Fotobasispapieren können verschiedene Polyethylene sowie deren Gemische eingesetzt werden. Erfindungsgemäß kann beispielsweise ein sogenanntes HDPE-Polyethylen oder ein LDPE-Ethylen oder eine Mischung beider Typen eingesetzt werden. Geeignet sind aber auch Ethylen/α-Olefincopolymere (LLDPE) oder Polypropylen.

Die Herstellung des erfindungsgemäßen Masterbatches kann in der US 5 049 595 beschriebenen Verfahrensweise unter Einsatz eines Doppelschneckenextruders mit Entgasungszone erfolgen. Dazu werden die zu vermischenden Bestandteile in den Einfüllschacht eines Extruders, beispielsweise eines Doppelschneckenextruders mit zwei gleichläufig ineinandergreifenden Schnecken, aufgegeben. Die Temperatur am Eingang des Extruders kann 100 bis 150 °C, die Temperatur in Mischzone etwa 120 bis 200°C und am Ausgang des Extruders etwa 150 bis 260°C betragen. Die Verweilzeit kann 5 bis 10 Minuten und der Druck 50 bis 20.000 Pa. Der so erhaltene Masterbatch kann in bekannter Weise granuliert werden. Auch andere Mischaggregate wie ein Banbury-Mixer sind zur Herstellung des erfindungsgemäßen Masterbatches geeignet.

Gegenstand der Erfindung ist ferner ein Schichtträger, der unter Verwendung des erfindungsgemäßen Masterbatches hergestellt worden ist. Der erfindungsgemäße Schichtträger kann ein fotografischer Schichtträger (Fotobasis-papier) oder ein Schichtträger für andere Bebilderungsverfahren sein. Solche Bebilderungsverfahren umfassen den Ink-Jet-Druck den Farbstoffdiffusionsverfahren (Dye Diffusion Thermal Transfer - D2T2). Unter fotografischen Schichtträgern oder Fotobasispapieren versteht man die Träger der fotografischen Emulsion, auf die im Falle der Silbersalzfotografie ein Bild durch Belichtung des Negativs übertragen wird.

Vor der Beschichtung eines Trägermaterials wird der erfindungsgemäße Masterbatch mit einem Polyolefinharz, wie einem Polyethylen, das sowohl ein HDPE als auch ein LDPE oder ein Gemisch beider Typen sein kann, verdünnt. Ebenfalls können zur Verdünnung des Masterbatches Ethylen-α-Olefincopolymer (LLDPE) oder Polypropylen eingesetzt werden.

Die Verdünnung des Masterbatches erfolgt derart, dass die Polyolefinschicht auf dem Rohpapier bis 40 Gew.% des Titandioxid-Masterbatches und 60 bis 99 Gew.% des zur Verdünnung eingesetzten Polyolefinharzes enthält. Besonders bevorzugt ist eine Polyolefinbeschichtung mit 5 bis 25 Gew.% des Titandioxid-Masterbatches und 75 bis 95 Gew.% des zur Verdünnung des Masterbatches eingesetzten Polyolefinharzes. Die Beschichtung des Rohpapiers mit dem verdünnten Titandioxid-Masterbatch erfolgt durch Extrusion unter Verwendung einer Breitschlitz-Düse in einem Temperaturbereich des Extruders von 190 bis 360°C. Die Polyolefinbeschichtung kann auf einer oder beiden Seiten des Rohpapiers aufgetragen werden.

Zur Beschichtung geeignete Trägermaterialien sind beschichtete oder unbeschichtete Rohpapiere und Polymerfolien.

Zur Herstellung des Rohpapiers eignen sich alle Sorten von Cellulosefasern sowie synthetische Fasern. Für die Leimung eignen sich alle in der Papierindustrie bekannten Leimungsmittel und Nass/Fest-Mittel. Besonders bevorzugte Leimungsmittel sind Alkylketendimere. Das Rohpapier kann Pigmente und Füllstoffe wie Kaolin, Calciumcarbonat, Silica oder Titandioxid sowie weitere Hilfsstoffe wie Entschäumer, optische Aufheller und Farbstoffe enthalten. Das Rohpapier kann auf einer Fourdrinier- oder Zylinder-Papiermaschine hergestellt werden. Das Flächengewicht des Rohpapiers kann 50 bis 300 g/m², vorzugsweise 70 bis 200 g/m², betragen. Ferner kann das Rohpapier eine Oberflächenleimung aufweisen.

In dem Fall, in dem die Polyolefinbeschichtung direkt auf einer oder auf beiden Seiten des Rohpapiers durch Extrusion aufgebracht werden soll, kann es zur Verbesserung der Haftung der Harzschicht auf dem Rohpapier sinnvoll sein, das Rohpapier einer sogenannten Corona-Entladung zu unterziehen.

Gemäß einer weiteren Ausführungsform des erfindungsgemäßen fotografischen Schichtträgers kann auf der Vorderseite des Rohpapiers ein Pigmentstrich aufgetragen sein und das Kunstharz durch Extrusion auf diesen Pigmentstrich des Rohpapiers aufgetragen sein. Durch den Pigmentstrich wird eine hochglatte Oberfläche erzielt, die trotz eines niedrigen Auftragsgewichts des anschließend aufgetragenen Kunstharzes eine hochglatte von Pits im wesentlichen freie Harzoberfläche liefern kann. Der zu diesem Zweck aufgetragene Pigmentstrich kann Calciumcarbonat und ein Bindemittel enthalten. Gemäß einer weiteren bevorzugten Ausführungsform kann der Pigmentstrich mindestens 30 Gew.% Kaolin enthalten. Das Calciumcarbonat kann in einer ausgewählten engen Korngrößenverteilung eingesetzt werden, wobei mindestens 70 Gew.% dieser Partikel eine Größe von kleiner als 1 µm aufweisen und mindestens 40 Gew.% dieser Partikel eine Korngröße von 0,35 bis 0,8 µm besitzen.

Das Auftragsgewicht der Polyolefinschicht beträgt im Allgemeinen 5 bis 50 g/m², insbesondere 10 bis 40 g/m². Bei Einsatz des zuvor beschriebenen Pigmentstrichs auf dem Rohpapier kann das Auftragsgewicht der Polyolefinschicht 12 bis 25 g/m² verringert werden.

Das folgende Beispiel dient der weiteren Erläuterung der Erfindung.

### Beispiel

### Herstellung des Masterbatches

Ein LDPE-Polyethylengranulat einer Dichte von 0,923 g/m³ wurde kontinuierlich mit Titandioxid (Rutil R 101, DuPont) und den weiteren Bestandteilen des erfindungsgemäßen Masterbatches gemäß folgender Rezeptur vermischt:

| | |
|---|---|
| Titandioxid | 50,0 Gew.% |
| Ultramarinblau | 0,3 Gew.% |
| Ultramarinviolett | 1,1 Gew.% |
| Phosphit-Antioxidans | 0,5 Gew.% |
| Phenol-Antioxidans | 1,0 Gew.% |
| Optischer Aufheller | 0,1 Gew.% |
| LDPE | 47,0 Gew.% |

Als Phosphit-Antioxidans wurde Ultranox® 641, als phenolisches Antioxidans Irganox® 1076, als optischer Aufheller Uvitex® eingesetzt. Das Ultramarinviolett hatte die CAS Nr.12769-96-9; das Ultramarinblau hatte die CAS Nr. 57455-37-5. Titandioxid war ein Rutil-Titandioxid.

Zum Vermischen wurde ein Doppelschneckenextruder vom Typ ZSK 30 mit zwei gegenläufig ineinander greifenden Schnecken verwendet. Die Temperatur am Eintrag des Extruders betrug etwa 120 °C, die Temperatur in der Mischzone etwa 140 °C und am Ausgang etwa 180 °C. Die Verweilzeit des zu homogenisierenden Materials im Extruder war 5 Minuten bei einem Druck von 0,050 bis 20 kPa. Das Material wurde anschließend granuliert.

Darüber hinaus wurde ein Masterbatch ohne Phosphit-Antioxidans hergestellt.

### Rohpapier

Eingesetzt wurde ein fotografisches Standard-Rohpapier mit einem Flächengewicht von 162 g/m², welches aus einer 100 Gew.% Laubholz-Sulfatzellstoff sowie 0,5 Gew.% Alkylketendimer und 0,7 Gew.% Polyamid-Polyamin-Epichlorhydrinharz enthaltenden Zellstoffsuspension hergestellt und mit oxidierter Stärke oberflächengeleimt wurde.

Das Rohpapier wurde in verdichteter Form, d.h. geglättet, eingesetzt und wies eine Dichte von 1,05 g/cm³ auf.

### Beschichtung des Rohpapiers

Es wurde ein Gemisch aus 18 Gew.% des zuvor beschriebenen Masterbatches und 72 Gew.% eines LDPE einer Dichte von 0,923 hergestellt. Die Beschichtung des Rohpapiers durch Extrusion erfolgte bei einer Extrusionsgeschwindigkeit von 350 m/min.

### Bestimmung der Pits-Anzahl

Die Oberfläche des polyolefinbeschichteten Papiers wird mit einem Mikroskop vergrößert und mit einer CCD-Kamera abgetastet. Mittels eines Bildverarbeitungsprogramms wird ein Profil des Pits-Niveau aus 45 Meßstellen erstellt.

Es zeigte sich eine deutliche Verbesserung des Pitsniveaus der Masterbatche nach den oben gezeigten Rezepturen im Vergleich zu einem Masterbatch mit dem organischen Rotpigment PV Echtrosa. Gegenüber dem Masterbatch ohne das Phosphit-Antioxidans zeigte der Masterbatch mit Phosphit-Antioxidans nochmals eine Verbesserung im Pitsniveau, also eine geringere Pitsanzahl. Es traten keine Düsenstreifen auf.

## Patentansprüche

1. Masterbatch (Kunststoff/Pigmentkonzentrat) zur Herstellung von Schichtträgern für Bebilderungsverfahren, enthaltend
- 25 bis 80 Gew.% Titandioxid,
- 20 bis 75 Gew.% Polyolefinharz,
- 0,1 bis 10 Gew.% Alkalialuminiumsulfosilikat-Rotpigment,
- 0,1 bis 6 Gew.% Stabilisator,
jeweils bezogen auf die Masse des Masterbatches.

2. Masterbatch nach Anspruch 1, **dadurch gekennzeichnet, dass** das Massenverhältnis Alkalialuminiumsulfosilikat-Rotpigment zur Gesamtmasse der Stabilisatoren 200 : 1 bis 1 : 60, besonders bevorzugt 40 : 1 bis 1 : 1, beträgt.

3. Masterbatch nach Anspruch 1 oder 2, **dadurch gekennzeichnet, dass** das Rotpigment Ultramarinviolett (CAS 12769-96-9) ist und in einer Menge von 0,1 bis 10 Gew.%, insbesondere 1,00 bis 2,00 Gew.%, bezogen auf die Masse des Masterbatches, enthalten ist.

4. Masterbatch nach einem der Ansprüche 1 bis 3, **dadurch gekennzeichnet, dass** als Stabilisator ein Phosphit-Antioxidans in einer Menge von 0,05 bis 3 Gew.%, insbesondere 0,1 bis 0,4 Gew.%, bezogen auf die Masse des Masterbatches, enthalten ist.

5. Masterbatch nach Anspruch 4, **dadurch gekennzeichnet, dass** das Phosphit-Antioxidans 2,4,6-Tri-tert.-butylphenyl-2-butyl-2-ethyl-1,3-propandiolphosphit ist.

6. Masterbatch nach einem der Ansprüche 1 bis 5, **dadurch gekennzeichnet, dass** als Stabilisator ein phenolisches Antioxidans in einer Menge von 0,05 bis 3 Gew.%, insbesondere 0,1 bis 0,6 Gew.%, bezogen auf die Masse des Masterbatches, enthalten ist.

7. Masterbatch nach Anspruch 6, **dadurch gekennzeichnet, dass** das phenolische Antioxidans Octadecyl-3,5-di-tert.-butyl-4-hydroxycinnamat ist.

8. Masterbatch nach einem der Ansprüche 1 bis 7, **dadurch gekennzeichnet, dass** ein Ultramarinblau in einer Menge von 0,05 bis 5 Gew.%, insbesondere 0,2 bis 0,6 Gew.%, bezogen auf die Masse des Masterbatches, enthalten ist.

9. Masterbatch nach einem der Ansprüche 1 bis 8, **dadurch gekennzeichnet, dass** ein optischer Aufheller auf der Grundlage eines Diaminiostilbensulfonsäure-, Diarylpyrazolyl- und/oder Bisbenzoxazolylstilbenderivats in einer Menge von 0,05 bis 1 Gew.%, insbesondere 0,1 bis 0,4 Gew.%, enthalten ist.

10. Masterbatch nach einem der Ansprüche 1 bis 9, **dadurch gekennzeichnet, dass** das Polyolefin ein Polyethylen geringer oder hoher Dichte oder ein Gemisch aus beiden ist.

11. Masterbatch, enthaltend
- 25 bis 60 Gew.% Titandioxid,
- 1,00 bis 2,00 Gew.% Ultramarinviolett (CAS 12769-96-9),
- 0,05 bis 5 Gew.% Ultramarinblau,
- 0,1 bis 0,4 Gew.% 2,4,6-Tri-tert.-butylphenyl-2-butyl-2-ethyl-1,3-propandiol-phosphit,
- 0,1 bis 0,6 Gew.% Octadecyl-3,5-di-tert.-butyl-4-hydroxycinnamat,
- 0,05 bis 1 Gew.% optischer Aufheller
- 40 bis 75 Gew.% Polyethylen (LDPE), jeweils bezogen auf die Masse des Masterbatches.

12. Schichtträger für Bebilderungsverfahren mit einem Rohpapier und einer auf dem Rohpapier oder einem auf dem Rohpapier befindlichen Pigmentstrich ausgebildeten Polyolefinschicht, **dadurch gekennzeichnet, dass** die Polyolefinschicht ein Kunstharz/Pigmentgemisch (Masterbatch) nach einem der Ansprüche 1 bis 10 im Gemisch mit einem Polyolefin enthält.

13. Schichtträger nach Anspruch 12, **dadurch gekennzeichnet, dass** die Polyolefinschicht 1 bis 40 Gew.%, vorzugsweise 5 bis 25 Gew.% des Masterbatches nach einem der Ansprüche 1 bis 10 und 60 bis 99 Gew.%, vorzugsweise 75 bis 95 Gew.%, eines Polyolefins, ausgewählt aus HDPE, LDPE, LLDPE, Polypropylen und deren Gemischen.

14. Schichtträger nach Anspruch 12 oder 13, **dadurch gekennzeichnet, dass** das Auftragsgewicht der Polyolefinschicht 10 bis 40 g/m², insbesondere 12 bis 25 g/m², beträgt.
